# EUROPÄISCHE PATENTSCHRIFT

(11) **EP 1 448 658 B1**
(45) Veröffentlichungstag und Bekanntmachung des Hinweises auf die Patenterteilung: **05.03.2008**
(21) Anmeldenummer: 02787634.1
(22) Anmeldetag: 11.11.2002
(51) Int. Cl.: C08G 63/78, B01J 10/00, B01J 19/18

(54) **VERFAHREN ZUR KONTINUIERLICHEN HERSTELLUNG VON HOCHMOLEKULAREM POLYESTER SOWIE VORRICHTUNG ZUR DURCHFÜHRUNG DES VERFAHRENS**
METHOD FOR THE CONTINUOUS PRODUCTION OF HIGH-MOLECULAR POLYESTER AND DEVICE FOR CARRYING OUT THE METHOD
PROCEDE DE PRODUCTION CONTINUE DE POLYESTER MACROMOLECULAIRE ET DISPOSITIF POUR METTRE EN OEUVRE CELUI-CI

(30) Priorität: 12.11.2001 DE 10155419
(43) Veröffentlichungstag der Anmeldung: 25.08.2004
(73) Patentinhaber: Uhde Inventa-Fischer GmbH, 13509 Berlin (DE)
(72) Erfinder: SCHULZ VAN ENDERT, Eike, 13467 Berlin (DE); HAGEN, Rainer, 13465 Berlin (DE); HILLE, Thomas, 13505 Berlin (DE); ATLAS, Christian, 13407 Berlin (DE); THIELE, Ulrich, 63486 Bruchköbel (DE)
(74) Vertreter: Pfenning, Meinig & Partner GbR
(86) Internationale Anmeldenummer: PCT/EP2002/012564
(87) Internationale Veröffentlichungsnummer: WO 2003/042278

(56) Entgegenhaltungen:
- FR-A- 1 545 487
- GB-A- 832 088
- US-A- 3 329 410
- US-A- 3 644 096
- US-A- 3 676 485
- US-A- 4 289 895
- US-A- 4 382 139
- US-A- 5 372 790

## Beschreibung

Die Erfindung betrifft ein Verfahren zur Herstellung hochmolekularer Polyester wie z.B. Polyethylenterphthalat (PET), Polybutylenterephthalat (PBT), Polynaphthalentherephthalat (PEN), Polytrimethylenterephthalat (PTT) und/oder Polyester anderer Dicarbonsäuren und Diole einschließlich ihrer Copolymere. Ebenso betrifft die Erfindung eine Vorrichtung zur Durchführung dieses Verfahrens. Bei dieser handelt es sich um einen einstufigen Turmreaktor mit dem ein Verfahren, bestehend aus nur zwei Reaktoren, für den Gesamtprozeß zur Verfügung gestellt wird.

Aus dem Stand der Technik sind Verfahren zur kontinuierlichen Herstellung von Polyestern bekannt, bei denen mehrstufige Reaktorsysteme verwendet werden, die aus drei bis fünf verschiedenen miteinander verbundenen Reaktionskesseln bestehen. Bei diesen Verfahren wird die Polyesterbildung in mehreren Reaktionsstufen, die zumeist als Rührkessel ausgebildet sind, durchgeführt, die räumlich voneinander getrennt ablaufen: Die Veresterung, die Umesterung, die Vorkondensation, die Polykondensation und die Polyveresterung. Die Reaktionsbedingungen für die Veresterung liegen dabei bei Temperaturen zwischen 200 und 280 °C und Drücken zwischen 0 und 4 bar, während die Bedingungen für die Umesterung üblicherweise bei atmosphärischen Drücken sowie bei Temperaturen zwischen 150 und 240 °C, in Abhängigkeit von den Ausgangssubstanzen, besonders von den Diolen, liegen. Für die Verfahren sind niedrige Temperaturen und niedrige Drücke erstrebenswert, um ungewünschte Nebenreaktionen zu vermeiden.

So ist aus der DE 35 44 551 A1 ein Verfahren zur kontinuierlichen Herstellung von hochmolekularem Polybuthylentheraphthalat bekannt, bei dem das Verfahren unter atmosphärischem Druck durchgeführt wird.

Aus der US-A-4 289 895 ist ein Verfahren zur Herstellung von Oligomeren für die Polykondensation zu Polyestern bekannt. Weitere Verfahren sind in der US-A-3 676 485, US-A-3 644 096, US-A-3 329 410 sowie der GB 8 320 88 A beschrieben.

Bei allen aus dem Stand der Technik bekannten Verfahren ist es wichtig, folgende Bedingungen zu erfüllen:
I) Geeignete Prozeßführung und Ausbildung der Vorrichtungen zur Vermeidung von unerwünschten Nebenreaktionen.
II) Schnellstmögliche Entfernung der Nebenprodukte wie z.B. Wasser, Methanol, THF und Acetaldehyd, wodurch das Reaktionsgleichgewicht nach rechts verschoben wird und die Hauptreaktion dadurch vorrangig abläuft.
III) Schonende Behandlung, d.h. kurze Verweilzeit bei minimaler Reaktionstemperatur.
IV) Optimal abgestimmte Druckreduzierung bzw. Temperaturerhöhung um den größtmöglichen Fortschritt der Ver-/Umesterung sowie der Polykondensation/Polyveresterung zu erreichen.
V) Hohe Oberflächenbildung zur Verbesserung der Reaktionskinetik.

Diese Aufgaben können durch mehrere hintereinander geschaltete Rührreaktoren, die nach dem Stand der Technik für diese Prozesse üblicherweise verwendet werden, nur unzureichend erfüllt werden. Dadurch kann z.B. die Qualität des Produktes oder die Menge an unerwünschten Nebenprodukten sowie die Ausbeute negativ beeinflußt werden, wodurch neben weiteren Nachteilen, wie Energieverbrauch, Wartungsanforderungen und Investitionsaufwand, die Wirtschaftlichkeit des Verfahrens stark beeinträchtigt wird.

Ausgehend von diesen Nachteilen des Standes der Technik war es Aufgabe der vorliegenden Erfindung ein Verfahren zur Herstellung von hochmolekularen Polyestern unter Verwendung eines einzigen, integrierten Reaktors bereitzustellen, das die Anforderungen I bis V erfüllt.

Diese Aufgabe wird durch das gattungsgemäße Verfahren mit den kennzeichnenden Merkmalen des Anspruchs 1 sowie durch die gattungsgemäße Vorrichtung mit den kennzeichnenden Merkmalen des Anspruchs 19 gelöst. Die weiteren abhängigen Ansprüche zeigen vorteilhafte Weiterbildungen auf.

Erfindungsgemäß wird ein Verfahren zur kontinuierlichen Herstellung von hochmolekularem Polyester bereitgestellt, basierend auf der Veresterung von Dicarbonsäuren und/oder Umesterung von Dicarbonsäureestern mit Diolen in Gegenwart von Katalysatoren unter simultaner Bildung eines Vorpolymers und dessen Polykondensation zum hochmolekularen Polyester. Folgende Schritte kennzeichnen dabei den Verfahrensablauf:
a1) Eine Paste und/oder eine Aufschlämmung der Dicarbonsäuren und des Diols wird hergestellt, wobei ein Molverhältnis von Diol zu Dicarbonsäure von 0,8 bis 1,8 eingehalten wird. Gleichzeitig wird die Temperatur zwischen 20 und 90 °C und der Druck zwischen 0,1 und 1 bar gehalten.
a2) Alternativ zu a1) kann ein Dicarbonsäureester aufgeschmolzen und mit dem Diol in einem Molverhältnis von Diol zu Dicarbonsäureester von 1,2 bis 1,8 bei einer Temperatur von 145 bis 165 °C gemischt werden.
b) Die Produkte aus a1) und/oder a2) werden kontinuierlich einem Turmreaktor z-ugeführt. Im Turmreaktor erfolgt dann kontinuierlich, simultan und unterbrechungslos die Veresterung bzw. Umesterung bis zur Vorkondensation, wobei folgende Reaktionsbedingungen eingehalten werden:
b1) Die Produkte aus a1) und/oder a2) werden einer Temperaturbehandlung bei 170 bis 270 °C und Drücken von 0,3 bis 3 bar unterzogen. Gleichzeitig wird eine Teilmenge des und/oder der Katalysator(en) zugeführt, während die Reaktionsdämpfe in situ, mittels eines Hydrozyklons, aus dem Reaktionsgemisch entfernt werden.
b2) Das aus b1) erhaltene Produkt wird kontinuierlich in eine Rohrstrecke-überführt und der Druck wird dabei zwischen 1 und 10 bar, die Temperatur zwischen 200 und 280 °C gehalten. In diesem Reaktionsschritt werden gleichzeitig 0,03 bis 0,3 mol Diol zugeführt.
b3) Das Produkt aus b2) über eine Fallstromkaskade mit mindestens 2 Schalen geführt wird ist wobei ein reduzierten Druck von 0,1 bis 2 bar und eine Temperatur zwischen 230 bis 280 °C eingehalten wird. In diese dritte Stufe werden 0,02 bis 0,2 mol Diol und eine Teilmenge des und/oder der Katalysator(en) zugeführt.
b4) Das Produkt aus b3) wird in einer Fallfilmreaktionszone einer weiteren Reaktion unterzogen, wobei der Druck zwischen 0,01 und 0,1 bar sowie die Temperatur zwischen 240 bis 280 °C gehalten wird.
b5) Das Reaktionsprodukt Wasser aus der Veresterung bzw. Methanol aus der Umesterung, die Nebenprodukte sowie überschüssiges Diol aus den Reaktionsschritten b1) und b3) bis b4) werden entfernt und das Diol nach Reinigung den einzelnen Prozeßstufen wieder zugeführt.
c1) Das aus b4) erhaltene Vorpolymer wird in einem üblichen Polykondensationsapparat bei Temperaturen zwischen 240 und 290 °C sowie Drücken zwischen 0,0002 bis 0,003 bar kontinuierlich zum Polymer weiterverarbeitet.
c2) Alternativ zu c1) ist es auch möglich, das erhaltene Vorpolymer einzufrieren, zu Pellets zu verarbeiten und einer Nachkondensation in fester Phase bei Temperaturen zwischen 160 und 230 °C unter Inertgas zu unterziehen.

Das neue Verfahren erlaubt den parallelen, unterbrechungslosen Ablauf der Um-/Veresterung sowie der Vorkondensation von Dicarbonsäuren und deren Estern mit Diolen in einem einzigen Turmreaktor. Dadurch wird erstmals die mechanische und verfahrenstechnische Integration mehrerer Prozeßstufen für die Polyestersynthese ermöglicht.

Die in der Stufe b1) entstandenen gasförmigen Nebenprodukte und das überschüssige Diol werden mittels eines Hydrozyklons im "statu nascendi" abgetrennt. Zusätzlich kann zur Unterstützung dieser Abtrennung durch den Boden ein Inertgas und/oder ein Prozeßgas geleitet werden. Der schnellen Abtrennung von leichter siedenden Reaktionsgasen kommt eine hohe Bedeutung zu in Hinsicht auf die Minimalisierung der Bildung von Nebenprodukten durch Auto- und Säurekatalyse. Der Gehalt an Nebenprodukten in der Reaktionsmasse wird aufgrund der Partialdrücke dieser Produkte vom anliegenden Reaktionsdruck und den vorhandenen statischen Produkthöhen bestimmt: Je höher der Gesamtdruck, um so höher die Nebenproduktbildung. Die Ausbildung als Hydrozyklon mit außen liegendem Wärmetauscher ist deshalb auf Grund der sich einstellenden Thermosyphon-Umwälzung entscheidend für eine kurze Verweilzeit der Nebenprodukte in der Reaktionsmasse bei ansteigender statischer Produkthöhe und weil für eine sofortige effektive Entgasung im Hydrozyklon und im Wärmetauscher gesorgt ist.

Bei der Durchführung einer Veresterung wird in Schritt b1) bevorzugt eine Temperatur zwischen 200 und 270 °C sowie ein Druck zwischen 0,3 und 3 bar eingehalten. Wird dagegen eine Umesterung durchgeführt, so wird Schritt b1) bei einer Temperatur zwischen 170 und 200 °C sowie bei einem Druck zwischen 0,3 bis 1 bar durchgeführt.

Im Schritt b2) wird bei Durchführung einer Veresterung der Druck bevorzugt zwischen 2 und 6 bar die Verweilzeit zwischen 1 und 5 min sowie die Temperatur bevorzugt zwischen 220 und 280 °C und besonders bevorzugt zwischen 230 bis 250 °C gehalten. Wird dagegen eine Umesterung durchgeführt, s.o wird der Druck in der Stufe b2) bevorzugt im Bereich zwischen 2 und 5 bar, die Verweilzeit zwischen 1 und 4 min sowie die Temperatur im Bereich zwischen 200 und 240 °C, besonders bevorzugt zwischen 210 bis 230 °C gehalten.

In einer vorteilhaften Weiterbildung des Verfahrens wird in der Stufe b3) das aus der Stufe b2) kontinuierlich zugeführte Reaktionsprodukt über eine Fallstromkaskade geführt, wobei sich ein um 20 bis 60 mbar fallender Druck und eine um 5 bis 20 °C steigende Temperatur je Schale einstellt. Bei der Veresterung entsteht dabei ein Vorkondensat mit 5 bis 20 Wiederholungseinheiten bei einem Umsatz zwischen 97 und 99,5 %. Bei der Umesterung liegt der Umsatz dagegen zwischen 98,5 und 99,8 %.

Bevorzugt wird zum normalen Prozeßgas zusätzlich ein trockenes Inertgas und/oder überhitztes Prozeßgas in mindestens die erste Schale unter die Reaktionsmassenoberflächen geführt. Hierdurch wird die Abtrennung der Nebenprodukte durch "Schleppeffekt", d.h. Sättigung der Gase, unterstützt. Gleichzeitig wird die innere Durchmischung der Reaktionsmasse erzielt. Die Verweilzeit in den einzelnen Schalen liegt bevorzugt in einem Bereich zwischen 5 und 15 min.

In einer weiteren vorteilhaften Weiterbildung des Verfahrens erfolgt die Produktzufuhr in den Schalen zentral. Dabei läuft das Produkt am Außenrand der Schalen gleichmäßig verteilt über die Außenwand ab, welches der beschleunigten Entgasung dient, und wird anschließend wieder zentral zusammengeführt.

Der Schritt b4) ist als Fallfilmzone mit Vorentspannung ausgebildet und wird bevorzugt bei einer Temperatur zwischen 245 und 270 °C und einer Verweilzeit zwischen 4 und 30 min, sowie einem Druck zwischen 0,01 und 0,05 bar durchgeführt. Dabei entsteht ein Vorkondensat mit 10 bis 40 Wiederholungseinheiten bei einem Umsatz von 99,8 %.

Das Reaktionsprodukt wird nach Verlassen einer oder mehrerer Fallfilmzone(n) bevorzugt durch einen beheizten Konus zusammengeführt, wobei in seinem zentralen Bereich mittels Spoiler eine Gas-Flüssigtrennung vorgenommen wird.

Bevorzugt setzt man als Diol 1,4-Butandiol, Ethandiol oder Propandiol ein. Auch für Cyclohexandimethanol ist das Verfahren geeignet. Als Dicarbonsäure kommt bevorzugt Terephthalsäure zum Einsatz. Bei der Umesterung wird als Dicarbonsäureester bevorzugt Dimethylterephthalat (DMT) verwendet. Als Katalysatoren kommen bevorzugt die bekannten Zinn-, Antimon-, Germanium-, Mangan-, Calcium-und/oder Titanmetalle etc., insbesondere als deren organische Verbindungen, zum Einsatz. Die Katalysatoren können auch in einer porösen Trägersubstanz untergebracht sein um eine gezielte Wirkung zu entfalten.

Erfindungsgemäß wird.ebenso eine Vorrichtung zur Durchführung des beschriebenen erfindungsgemäßen Verfahrens bereitgestellt, die mindestens einen Rührapparat, Reaktionszonen für die gleichzeitige Veresterung oder Umesterung und Vorkondensation ebenso wie mindestens einen Polykondensationsreaktor für Fest- und/oder Flüssigphase aufweist. Die einzelnen Reaktionszonen sind dabei in einem Turmreaktor vereinigt und mindestens mit einem Reaktor für die Polykondensation verbunden.

Der Turmreaktor ist dabei folgendermaßen aufgebaut: Im unteren Drittel ist der Turmreaktor in Form eines Hydrozyklons mit anhängendem Wärmetauscher ausgebildet und weist eine Zuführung für die Paste, die Aufschlämmung und/oder das flüssige Rohstoffgemisch auf. Der Hydrozyklon ist über eine Druckleitung mit der Kopfseite des Turmreaktors verbunden. Dabei ist die Kopfseite des Turmreaktors im oberen Drittel in Form einer Fallstromkaskade ausgebildet. Diese Kaskade ist über ein geeignetes Zulaufrohr mit dem mittleren Teil des Turmreaktors verbunden, der in Form einer ein- oder mehrstufigen Fallfilmzone mit Vorentspannung ausgebildet ist.

Bevorzugt weist der Hydrozyklon einen Brüdenstutzen auf und ist im unteren Teil des Turmreaktors mit einem Wärmeaustauscher verbunden. Dadurch wird es ermöglicht, das Produkt in natürlichem oder erzwungenem Kreislauf über den Wärmetauscher in den Hydrozyklon zu führen.

In einer vorteilhaften Ausgestaltung weist der Wärmeaustauscher einen separaten Gaskamin auf, der in einen oberen Teil des Zyklons führt.

Bevorzugt weist die Kaskade mindestens zwei, besonders bevorzugt vier Schalen auf. Dabei kann in mindestens einem Kaskadenbereich ein Rühraggregat zur Unterstützung der Eingabe von Diol oder Additiven integriert sein.

Die Druckleitung ist bevorzugt als Doppelmantelleitung ausgebildet, die sich im Inneren der ersten Kopfkaskade als Heizwendel fortsetzt.
Die Druckleitung kann dabei mit einer Volumenförderpumpe und statischen Mischelementen oder einer Mischpumpe ausgestattet sein.

Bevorzugt weist der Hydrozyklon einen Inertgaseintritt mit geeignetem Gasverteiler in seinem konischen Bereich auf.

In einer vorteilhaften Ausgestaltung besitzt eine der Kopfschalen im Brüdenbereich ebenfalls einen Inertgaseintritt. Die Reaktionsgase und/oder Fremdgase werden bevorzugt von Reaktionszone zu Reaktionszone im Gleichstrom mittels abgetauchter Zuführung durch die Reaktionsflüssigkeit geleitet.

Bevorzugt weist die Vorentspannungszone zur Fallfilmzone ebenfalls die Form eines Hydrozyklons auf, der den Flash-Effekt unterstützt und für angemessene Trennung der Flüssig-/Gasphasen sorgt.

Die Zuführung des Produktes aus der Vorentspannungszone zur Fallfilmzone erfolgt durch geeignete Gestaltung des Ablaufes daraus im konzentrischen Außenbereich der Fallfilmzonen und das Produkt wird über Gassen im Rohrfeld gleichmäßig verteilt.

Ebenso ist es bevorzugt, daß die Fallfilmzone mindestens ein Rohrfeld aufweist. Jedem Rohr des Rohrfeldes ist dabei ein Einlaufzylinder zugeordnet, der eine gleichmäßige Benetzung der Rohrinnenseite sicherstellt, wobei dieser mit überlappenden, nicht-axialen Schlitzen am Umfang ausgestattet ist, aufgrund des Schlitzdruckverlustes eine konstante Füllhöhe oberhalb der Rohrreihen erzeugt wird und einen Maximalüberlauf mit gezackter Krone besitzt, wobei die Schlitze so ausgebildet sind, daß Viskositätsunterschiede nur vernachlässigbare Änderungen der Füllhöhe bewirken, wohl aber eine proportionale Änderung von Füllhöhe zu Flüssigkeitsdurchsatz.

Ebenso ist es bevorzugt, daß die Länge der Fallfilmrohre so bemessen ist, daß eine totale Benetzung erfolgt.

Bevorzugt wird der Durchmesser der Fallfilmrohre größer als die größte auftretende Reaktionsdampfblase ausgewählt. Die Reaktionsbrüden sind dabei im Gleichstrom mit dem abwärts fließenden Produkt geführt.

Das Fallfilm-Rohrfeld kann vorzugsweise auch zur Wärmeübertragung genutzt werden.

Bevorzugt ist der gesamte Turmreaktor mit einem Mantel zur Beheizung mit organischen Heizmedien in Dampfform ausgerüstet.

In einer weiteren vorteilhaften Ausgestaltung sind sämtliche Wärmetauschflächen in den einzelnen Zonen für flüssige Wärmeträger zur prozeßrelevanten Temperatur- und Wärmemengenverteilung ausgerüstet.

Anhand der folgenden Figuren und des Beispiels soll der erfindungsgemäße Gegenstand näher erläutert werden, ohne diesen auf diese Ausführungen einzuschränken.

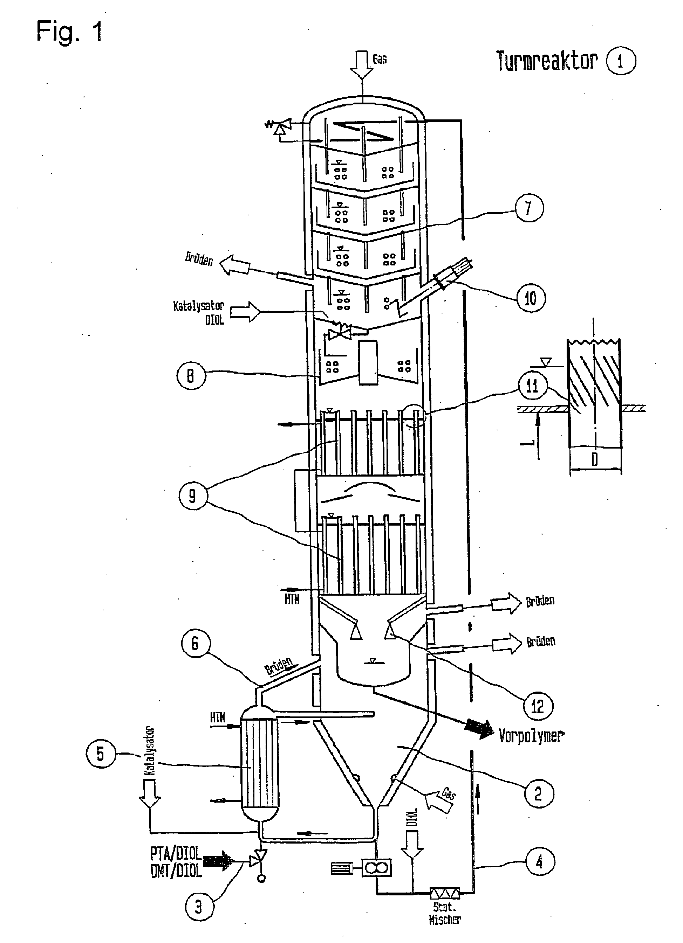

Fig. 1 zeigt den schematischen Aufbau eines Turmreaktors (1). Eine Aufschlämmung der Dicarbonsäure mit dem Diol oder der geschmolzene Dicarbonsäureester und das Diol werden im unteren Bereich eines am Turmreaktor hängenden Wärmetauschers (5) unter Druck in die Reaktionsmasse eingespritzt, wobei es durch geeignete Ausführung des Einspritzstutzens (3) zu einer optimalen Durchmischung mit dem im Unterteil befindlichen, siedenden Reaktionsprodukt kommt. Hier kann auch ein Katalysator, der für einige Polyesterreaktionen vorteilhaft ist, eingespeist werden. Der Wärmetauscher sorgt für die Aufwärmung des Gemisches auf Reaktionssiedetemperatur. Das siedende Reaktionsgemisch gelangt über eine kurze Verbindungsleitung, die tangential in einen Hydrozyklon (2) mündet zur weiteren Reaktion. Zur schnellen Reaktionsgasabfuhr aus der Reaktionsmasse wird der Hauptteil dieser Gase über eine gesonderte Leitung, einen Dampfkamin (6), aus dem Wärmetauscher in den Gasraum des Zyklones geleitet.

Im Hydrozyklon (2)findet eine weitere Entgasung bei Fortsetzung der Reaktion statt. Das reagierte Produkt gelangt über eine kurze Verbindungsleitung am Fuß des Zyklons in den Wärmetauscher (5) zurück, so daß ein natürlicher Umlauf entsteht. Das gesamte Reaktionsgas wird oberhalb der Reaktionsmasse aus dem Dampfraum des Hydrozyklons (2) abgeführt.

Bei besonders empfindlichen Produkten, wie z.B. bei der Herstellung von PBT, entsteht durch Zyklisierung von Butandiol, das unerwünschte Tetrahydrofuran (THF). Die Bildung wird durch Präsenz von Wasser, das beispielsweise bei der Veresterung entsteht, verstärkt.

Vorteilhaft kann in diesem Falle im unteren Bereich des Zyklones ein vorgewärmtes, ungesättigtes Schleppgas oder überhitzter Prozeßbrüden eingeleitet werden, wodurch die Entfernung von, insbesondere Wasser, Methanol, Acetaldehyd oder Tetrahydrofuran aus der Reaktionsmasse beschleunigt wird.

Ein Teilstrom des entgasten Reaktionsproduktes wird aus der unteren Verbindungsleitung entnommen und mittels einem druckaufbauenden Volumenförderer in eine beheizte Druckleitung (4) gepumpt. Die Druckleitung (4) ist am Pumpenaustritt mit einer Dosierleitung für Diol ausgestattet, das über statische Mischelemente mit der Reaktionsmasse innig vermischt wird. Je nach Produkt kann hier ein Druck von bis zu 10 bar über ein Druckhalteventil eingestellt worden. Alternativ kann die Durchmischung und der Druck auch durch eine spezielle Mischpumpe erzeugt werden.

Durch die Einbringung des Diols unter Druck wird eine spontane Umsetzung mit den Carboxyl- oder Methoxygruppen eingeleitet, die im Zeitbereich von 1 bis 5 Minuten abläuft und nach Entspannung auf atmosphärischen bzw. unteratmosphärischen Druck beendet ist. Die Reaktionszeit wird dadurch eingestellt, daß ein Teil der Druckleitung in Form einer Heizwendel in der obersten Reaktionszone des Turmreaktors angeordnet ist. Der Doppelmantel sorgt dafür, daß die durch Entspannung abgekühlte Reaktionsmasse wieder auf Reaktionstemperatur gebracht wird.

Die entspannte Reaktionsmasse wird nun durch eine Fallstromkaskade (7) geleitet, die aus mindestens 2 vorzugsweise 4 bis 5 mit Heizwendeln bestückten Reaktionsschalen besteht, in die das Produkt zentrisch und unter der Oberfläche abgetaucht einläuft. Das Reaktionsgas wird hingegen getrennt aus der jeweils darüberliegenden Schale, mittels ebenfalls äbgetauchten Rohren durch die Reaktionsmasse geleitet. Hieraus ergibt sich ein Differenzdruck, der sich vorzugsweise als Druckerniedrigung von Schale zu Schale von oben nach unten auswirkt.

Das Produkt aus der zweiten bis x-ten Schale läuft jeweils an der äußeren Wandung, die als zusätzliche Ausdampffläche wirkt, jeder Schale in einen konisch geformten Sammler, dessen Ablauf sich zentrisch am tiefsten Punkt des Konus befindet. Im Sammler befinden sich auch die Tauchrohre, die das Reaktionsgas in die nächste Schale einleiten. Die Schalen werden vorzugsweise für eine Verweilzeit von 5 bis 10 min ausgelegt, um den erwünschten Reaktionsfortschritt zu erzielen. Zur Steuerung der Reaktionstemperatur, vorzugsweise einer sanften Erhöhung um 2 bis 10 °C je Schale, ist jede Schale mit Heizwendeln ausgestattet.

Aus der Anordnung ergibt sich, daß das Reaktionsgas im Gleichstrom mit dem Produktfluß geführt wird, wobei das Gas durch die Reaktionsmasse perlt und dort einerseits für eine optimale Durchmischung sorgt, andererseits wegen des Druckabfalls bei gleichzeitiger Tomperaturerhöhung seine Sättigungsgrenze nicht erreicht und dadurch aufnahmefähig bleibt für sich neubildendes Reaktionsgas (Schleppeffekt). Ein weiterer wichtiger Effekt der beschriebenen Fallstromkaskade ist, daß die anfänglich noch vorhandenen niedrigsiedenden kurzkettigen Oligomere des Produkts mit dem Reaktionsgas in die Reaktionsmasse zurückgeführt werden und dort weiter an der Reaktion teilnehmen. Weiter fördert die Blasenbildung durch das Einleiten des Gases in die Reaktionsmasse, durch zusätzliche Oberflächenbildung und Kontakt mit dem gasförmigen Diol die Geschwindigkeit der Reaktion.

Dieses ist beispielsweise bei Rührkaskaden nicht gegeben und verringert damit die Ausbeute und verursacht Störungen in den nachfolgenden Kondensatoren und Vakuumeinrichtungen.

Sofern zur Einmischung von zusätzlichen Additiven oder Diol erforderlich, kann in der letzten Schale ein schräg angestellter Rührer (10) angeordnet werden, der die Dampfblasendurchmischung unterstützt.

Die Reaktionsmasse wird im weiteren durch eine geeignete Zuführung zur erneuten Entspannung in einer hydrozyklonähnlich ausgebildeten Anordnung gebracht, die wie die vorherigen Schalen mit Heizwendeln zur Temperaturnachführung ausgestattet ist. Die Gas-/Flüssigtrennung erfolgt an der Oberfläche, wobei durch geeignete Schikanen sichergestellt ist, daß die Reaktionsmasse über den gezackten Außenrand der Schale gleichmäßig abläuft, unbeeinflußt von sich bildenden Reaktionsgasblasen. Die an der Peripherie ablaufende Reaktionsmasse wird auf einem Rohrboden - ebenfalls auf dessen Peripherie - aufgefangen und verteilt sich unter Zuhilfenahme von sogen. "Gassen" gleichmäßig auf dem Boden.

Der Rohrboden ist Teil eines Gerad-Rohrbündels (9), das gleichzeitig der Filmbildung an den inneren Rohrflächen und dem Wärmetausch dient. Jedem Rohr im Bündel ist ein Einlaufzylinder (11) zugeordnet. Dieser ist mit einer Reihe nichtaxialer, überlappender Schlitze mit einer besonders abgeglichenen Geometrie an seiner Peripherie ausgeführt. Die Geometrie ist so festgelegt, daß
- ein Mindestniveau für alle Rohre zur gleichmäßigen Flüssigkeitsverteilung eingehalten wird,
- für ein bestimmtes Viskositätsspektrum nur geringe Niveaudifferenzen auftreten,
- Durchsatzänderungen eine proportionale Niveauänderung bewirken und die innere Rohrfläche-über die gesamte Rohrlänge gleichmäßig benetzt wird,
- die obere Kante der Einlaufzylinder (11) als Notüberlauf dient und mit einer gezackten Krone ausgerüstet ist.

Der Rohrdurchmesser wird so gewählt, daß er größer als die größtmöglich entstehende Reaktionsgasblase ist. Der. Reaktionsdampf wird im Gleichstrom mit dem herablaufenden Produktfilm geführt. Das Verhältnis Rohrlänge zu Rohrdurchmesser soll zwischen 10 und 25 liegen und die Oberfläche der Fallfilmrohre muß der Benetzbarkeit des Produktes angepaßt sein. Das Produkt tritt als Film und/oder Strähnen an der Unterseite der Fallfilmrohre aus, wird durch konische Sammlerbleche, die den Gasstrom hindurchlassen, zusammengeführt und einer zweiten Fallfilmreaktionszone an der Peripherie zugeführt. Diese ist prinzipiell gleich gestaltet wie die erste Zone, berücksichtigt aber die erhöhten Viskositäten durch entsprechende Maßnahmen an den Einlaufzylindern (11), Verteilung der Rohre und Länge des Moduls.

Unterhalb des Moduls befindet sich eine Vorrichtung zur Zusammenführung der Schmelze, die im Zentrum ein Zentralrohr für die Durchführung der Reaktionsgase und das Produkt enthält. Das an der-Vorrichtung vorzugsweise an der Wandung, ablaufende Produkt wird durch eine Spoilereinrichtung (12) vom Gasstrom getrennt, der umgelenkt und im Gasraum des integrierten Vorpolymersammlers abgeführt wird. Das gesammelte Vorpolymer wird nach einer Beruhigungs- und Nachreaktionszeit von 5 bis 15 Minuten über ein zentrales Rohr aus dem Sammler ausgetragen und kann nun einer Weiterbehandlung, z.B. einer Granulierung mit nachfolgender Festphasennachkondensation oder einer Schmelzphasennachkondensation unterzogen werden. Für bestimmte Produkte ist die Möglichkeit vorgesehen einen Teilstrom des Vorpolymers in das untere Fallfilmmodul zurückzuführen und mit dem Vorprodukt aus dem oberen Fallfilmmodul zu mischen, so daß auf einfache Weise die Reaktionszeit vorteilhaft verlängert werden kann.

Die Außenhülle des Reaktors ist mit einem Heizmantel ausgestattet der vorzugsweise für die Beheizung als aktive Isolation, mit einem synthetischen Wärmeträgerdampf vorgesehen ist. Das für die Reaktion erforderliche Temperaturprofil wird mit Hilfe der inneren Heizflächen zonenweise im wesentlichen mit einem flüssigen Wärmeträgeröl erzeugt. Die Reaktionsgase aus den verschiedenen Zonen werden durch übliche Einrichtungen wie Kondensatoren, Kolonnen und Vakuumssystemen abgeführt, wobei im wesentlichen das Diol mit geringen Oligomeranteilen in den Prozess zurückgeführt wird.

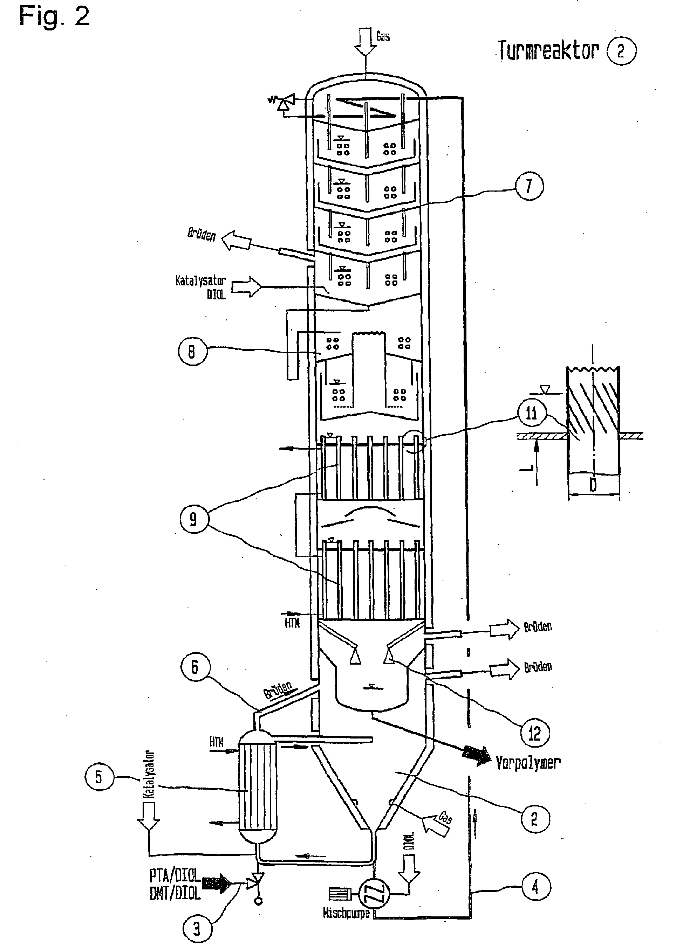

Fig. 2 zeigt eine weitere Variante des Turmreaktors (1), die die wesentlichen Elemente wie in Fig. 1 aufweist.

Allerdings wird bei dieser Variante des Turmreaktors anstelle des Druckhalteventils und der statischen Mischelemente eine spezielle Mischpumpe verwendet.

Ebenso wird bei dieser Variante auf die Verwendung eines schräg angestellten Rührers zur Einmischung zusätzlicher Additive und Diole verzichtet.

### Beispiel 1

1. Eine auf 20-90 °C temperierte Paste aus den Reaktanten PTA und Diol oder das flüssige Carboxyester und Diol mit einer Temperatur von 150 °C bei Molverhältnissen zwischen 0,8 und 1,8 werden in eine erste Kammer injiziert mit der existierenden Monomer/Vorpolymerisat-Reaktionsmasse im Wärmetauscher mit aus dem Hydrozyklon rezirkulierten Produkt und mindestens einem Katalysator intensiv vermischt.
2. Entgasung durch Entfernung der Nebenprodukte in einer Größenordnung zwischen 30 und 90% vorzugsweise 40 und 60% "in situ" während des Durchganges durch den Wärmeaustauscher, der die Reaktionsdämpfe in den Hydrozyklon führt über einen 'Schornstein'-Kanal (Gas/Flüssigkeit-Trennung).
3. Die Reaktionsmasse wird weiter entgast in einen verbundenen Hydrozyklon bei Drücken zwischen 500 bis 3000 hPa.
4. Einspritzen eines Trägergases am Boden des Hydrozyklons für eine weiter verbesserte Entfernung von Nebenprodukten. Als Trägergas kann jedes inerte Medium oder eines der gereinigten gasförmigen Nebenprodukte (überhitzt) eingesetzt werden.
5. Überführen der Reaktionsmasse durch ein unter Druck stehendes Rohr und gleichzeitiges Zufügen von Teilen des Diols zu der Masse in Mengen zwischen 0,03 bis 0,5 mol/mol Säure bzw. Dimethylester, vorzugsweise zwischen 0,1 und 0,3 mol/mol Säure bzw. Dimethylester, um eine sofortige Reduktion der Carboxylgruppen oder einen Austausch von Ester-Endgruppen zwischen 20-80%, vorzugsweise 40-60% der im Hydrozyklon vorhandenen Säure oder Ester-Endgruppen zu erzielen.
6. Überführung der Reaktionsmasse in eine erste Schale um die zuvor gebildeten Nebenprodukte zu entfernen und die Reaktionsmasse mittels des Heizmantels des unter Druck stehenden Rohrs in dem Behälter wieder aufzuheizen.
7. Das Produkt wird durch mindestens zwei oder eine Mehrzahl von dampfgerührten integrierten Schalen mit einer Verweilzeit zwischen 5 und 15 min geführt, wobei die Temperatur stetig in Schritten von 1 bis 20°C erhöht und der Druck stetig um 5 bis 50 hPa pro Schale verringert wird. Die durch Fortsetzung der Reaktion erzeugten Dämpfe sind in einem nichtgesättigten gasförmigen Zustand und werden unterhalb der Flüssigkeitsoberfläche der folgenden Schale eingeführt, während das Produkt flüssigkeitsdicht in den folgenden Behälter einfließt. Die Dämpfe fördern das Entfernen der Reaktionsseitenprodukte durch intensive Vermischung mit dem Primärprodukt. Zusätzlich kann getrocknetes Inertgas oder Prozeßgas in die erste Schale eingelassen werden, um weiter den Reaktionsfortschritt durch Sättigung von Dampf und Gas zu verbessern. Der erhältliche Reaktionsfortschritt liegt zwischen 10 und 40% für die simultanen Reaktionen zwischen Carboxyl und Hydroxylgruppen ebenso wie Esterendgruppen.
8. Das Produkt wird in einen weiteren Flashbehälter überführt, in dem ein um 1/5 bis 1/50 geringerer Druck als im letzten dampfgerührten Behälter herrscht und die Reaktionstemperatur wird um 2 bis 20 °C erhöht. Die resultierenden Polyester besitzen eine Kettenlänge von 5-20, vorzugsweise zwischen 10 und 15 Wiederholeinheiten bei einem Umsatz von mehr als 99,5%.
9. Fließenlassen des Polyesters durch mindestens ein hoch oberflächenaktives Rohrfeld, in dem jede Produktteilmenge gleichmäßig der Temperatur und Oberfläche ausgesetzt wird, woraus ein Vorpolymer resultiert, das vorzugsweise zwischen 20 und 35 Wiederholeinheiten und einem Umsatz von 99,8% aufweist. Die überhitzten Reaktionsgase werden im Gleichstrom mit den Polymerfilmen nach unten geführt und absorbieren jedes neu auftretende gasförmige Nebenprodukt der Polymerfilme. Diese Anordnung ermöglicht eine Durchführung des Verfahrens zu den obigen Bedingungen in einem Zeitraum zwischen 5 und 30, vorzugsweise 8 und 16 min.
10. Zum Ausgleich der molekularen Verteilung verweilt das Produkt zwischen 2 und 10 min im System.
11. Das Polymer wird in einen Polykondensationsreaktor überführt, in dem ein PG von 80-150 erreicht wird. Ein geeigneter Reaktor wird beispielsweise in der US 5,779,986 und der EP 0 719 582 beschrieben.
12. Alternativ kann das nach 2 bis 10 min abgepumpte Produkt zu einem Granulat verarbeitet werden, das dann weiter im festen Zustand wärmebehandelt werden kann, um ein Polymer mit einem PG von 90- 200 zu erhalten.

Sowohl Polymere hergestellt nach Punkt 1-11 als auch Punkt 1-10 und Punkt 12 sind hervorragend geeignet für faserbildende Prozesse, als Harz für Flaschenanwendungen, insbesondere für "stille Wässer" sowie für die filmbildende und technische Kunststoffanwendung.

Sie fallen u.a. auf durch einen um bis zu 2,5 Punkte verbesserten Gelbgrad gemessen gemäß CIELAB(b*-Wert) und in einem bis zu 5 Punkte verbesserten Weißgrad (L*-Wert).

Diese Analysen deuten u.a. darauf hin, daß es sich gegenüber den in bisher üblichen Verfahren und Ausrüstungen hergestellten Polymeren um Polyester von hoher Reinheit handelt.

Das erfindungsgemäße Verfahren und die Vorrichtung stellen deshalb gegenüber dem Stand der Technik ein neues und in seinen Merkmalen fortschrittliches Konzept dar.

## Patentansprüche

1. Verfahren zur kontinuierlichen Herstellung von hochmolekularem Polyester durch Veresterung von Dicarbonsäuren und/oder Umesterung von Dicarbonsäureestern mit Diolen in Gegenwart von Katalysatoren unter Bildung eines Vorpolymers und dessen Polykondensation zum hochmolekularen Polyester,
**dadurch gekennzeichnet, daß** man
a1) eine Paste und/oder eine Aufschlämmung der Dicarbonsäure und des Diols herstellt, wobei ein Molverhältnis von Diol zur Dicarbonsäure von 0,8 bis 1,8, eine Temperatur von 20 bis 90° und ein Druck zwischen 0,1 bis 1,0 bar eingehalten wird, oder
a2) den Dicarbonsäureester aufschmilzt und diesen zusammen mit dem Diol im Molverhältnis von Diol zu Dicarbonsäureester von 1,2 bis 1,8 bei einer Temperatur von 145 bis 165° vermischt,
b) die Produkte aus a1) und/oder a2) kontinuierlich einem Turmreaktor zuführt und im Turmreaktor kontinuierlich, simultan und unterbrechungslos eine Veresterung und/oder Umesterung bis zur Vorkondensation durchführt, wobei folgende Bedingungen eingehalten werden:
b1) die Produkte aus a1) und/oder a2) werden einer Behandlung bei einer Temperatur von 170 bis 270 °C und einem Druck von 0,3 bis 3 bar unterzogen, wobei in diesem ersten Reaktionsschritt eine Teilmenge des Katalysators zugeführt und die Reaktionsdämpfe in situ mittels eines Hydrozyklons, aus dem Reaktionsgemisch entfernt werden,
b2) das Produkt des Reaktionsschritts b1) wird kontinuierlich in eine Rohrstrecke überführt und bei einem Druck von 1 bis 10 bar und 200 bis 280 °C gehalten, wobei in diesem Reaktionsschritt 0,03 bis 0,3 Mol Diol zugeführt werden,
b3) das Produkt des Reaktionsschritts b2) kontinuierlich über eine Fallstromkaskade mit mindestens 2 Schalen geführt wird, in der sich selbsttätig reduzierende Drücke im Bereich von 0,2 bis 1 bar und selbsttätig erhöhende Temperaturen von 230 bis 280 °C eingehalten werden, wobei in die dritte Zone 0,02 bis 0,2 Mol Diol und eine Teilmenge des Katalysators zugeführt wird.
b4) das Produkt aus Reaktionsschritt b3) wird in einer Fallfilmreaktionszone einer weiteren Reaktion bei 0,01 bis 0,1 bar und 240 bis 280 °C unterzogen, und
b5) die Reaktionsprodukte Wasser bzw. Methanol, Nebenprodukte und überschüssiges Diol aus den Reaktionsschritten b1) und b3) bis b4) für die einzelnen Reaktionsschritte wieder zurückgeführt,
c1) das erhaltene Vorpolymer aus b4) in einem üblichen Polykondensationsapparat bei Temperaturen von 240 bis 290 °C und Drücken von 0,0002 bis 0,003 bar kontinuierlich polykondensiert oder
c2) das erhaltene Vorpolymer einfriert, zu Pellets verarbeitet und einer Nachkondensation in fester Phase bei Temperaturen zwischen 160 und 230 °C unter konditioniertem Inertgas unterzieht.

2. Verfahren nach Anspruch 1, **dadurch gekennzeichnet, daß** zur Unterstützung der Abtrennung zusätzlich durch den Boden ein Inertgas und/oder ein überhitztes Prozeßgas geleitet wird.

3. Verfahren nach mindestens einem der Ansprüche 1 bis 2, **dadurch gekennzeichnet, daß** in Reaktionsschritt b1) bei der Umesterung eine Temperatur von 170 bis 200 °C und ein Druck zwischen 0,3 bis 1 bar eingehalten wird.

4. Verfahren nach mindestens einem der Ansprüche 1 bis 3, **dadurch gekennzeichnet, daß** in Reaktionsschritt b1) bei der Veresterung eine Temperatur von 200 bis 270 °C und ein Druck zwischen 0,3 bis 3 bar eingehalten wird.

5. Verfahren nach mindestens einem der Ansprüche 1 bis 4, **dadurch gekennzeichnet, daß** bei der Umesterung der Druck in Reaktionsschritt b2) im Bereich von 2 bis 5 bar, die Verweilzeit zwischen 1 und 5 min sowie die Temperatur im Bereich von 200 bis 240 °C und bevorzugt zwischen 210 bis 230 °C liegt.

6. Verfahren nach mindestens einem der Ansprüche 1 bis 5, **dadurch gekennzeichnet, daß** bei der Veresterung der Druck in Reaktionsschritt b2) im Bereich von 2 bis 6 bar, die Verweilzeit zwischen 1 und 4 min sowie die Temperatur im Bereich von 220 bis 280 °C und bevorzugt zwischen 230 bis 270 °C liegt.

7. Verfahren nach mindestens einem der Ansprüche 1 bis 6, **dadurch gekennzeichnet, daß** bei der Umesterung in Reaktionsschritt b3) eine Temperatur von 220 bis 260 °C eingehalten wird.

8. Verfahren nach mindestens einem der Ansprüche 1 bis 7, **dadurch gekennzeichnet, daß** bei der Veresterung in Reaktionsschritt b3) eine Temperatur von 230 bis 280 °C eingehalten wird.

9. Verfahren nach mindestens einem der Ansprüche 1 bis 8, **dadurch gekennzeichnet, daß** sich im Reaktionsschritt b3) ein um 20 bis 60 mbar fallender Druck und eine um 5 bis 20 °C steigende Temperatur je Kammer einstellt, wodurch ein Vorkondensat mit 5-20 Wiederholungseinheiten und einem Umsatz von 98,5 bis 99,5 % bei der Umesterung bzw. einem Umsatz von 97 bis

10. Verfahren nach Anspruch 9, **dadurch gekennzeichnet, daß** zusätzlich zum gebildeten Prozeßgas ein Inertgas und/oder ein weiteres überhitztes Prozeßgas zur Unterstützung der Abtrennung der Nebenprodukte in mindestens die erste Schale unter die Reaktionsmassenoberfläche geführt wird.

11. Verfahren nach Anspruch 9 oder 10, **dadurch gekennzeichnet, daß** die Verweilzeit in den einzelnen Schalen im Bereich von 5-15 min liegt.

12. Verfahren nach mindestens einem der Ansprüche 9 bis 11, **dadurch gekennzeichnet, daß** die Produktzufuhr in den Schalen zentral erfolgt und das Produkt am Außenrand der Schale gleichmäßig verteilt über die Außenwand abläuft zur beschleunigten Entgasung und danach wieder zentral zusammengeführt wird.

13. Verfahren nach mindestens einem der Ansprüche 1 bis 12, **dadurch gekennzeichnet, daß** im Reaktionsschritt b4), die als Fallfilm-Reaktionszone ausgebildet ist, die Reaktion bevorzugt bei 245 bis 270 °C und 0,01 bis 0,05 bar mit einer Verweilzeit von 4 bis 30 min weitergeführt wird, wobei ein Vorkondensat mit 10-40 Wiederholungseinheiten und einem Umsatz von 99,8 % entsteht.

14. Verfahren nach mindestens einem der Ansprüche 1 bis 13, **dadurch gekennzeichnet, daß** das Reaktionsprodukt nach Verlassen der einen oder mehrerer Fallfilmzonen b4) durch einen beheizten Konus zusammengeführt wird und in seinem zentralen Bereich mittels Spoiler eine Gas-Flüssigtrennung vorgenommen wird.

15. Verfahren nach mindestens einem der 1 bis 14, **dadurch gekennzeichnet, daß** man als Diol 1,4-Butandiol verwendet.

16. Verfahren, nach mindestens einem der Ansprüche 1 bis 15, **dadurch gekennzeichnet, daß** man als Dicarbonsäure Terephthalsäure verwendet.

17. Verfahren nach mindestens einem der Ansprüche 1 bis 16, **dadurch gekennzeichnet, daß** man als Dicarbonsäureester Dimethylterephthalat (DMT) verwendet.

18. Verfahren nach mindestens einem der Ansprüche 1 bis 17, **dadurch gekennzeichnet, daß** als Katalysatoren Antimon-, Germanium-, Zinn- und/oder Titanmetall oder organische Verbindungen hiervon, auch in poröser Trägersubstanz, verwendet werden.

19. Vorrichtung zur Durchführung des Verfahrens nach mindestens einem der Ansprüche 1 bis 18 umfassend mindestens einen Rührapparat, Reaktionszonen für die gleichzeitige Veresterung und/oder Umesterung sowie Vorkondensation ebenso wie mindestens einen Polykondensationsreaktor für Fest- und/oder Flüssigphase, wobei die einzelnen Reaktionszonen miteinander verbunden sind,
**dadurch gekennzeichnet, daß** die Reaktionszonen in einem Turmreaktor (1) vereinigt und mindestens mit einem Reaktor für die Polykondensation verbunden sind, wobei der mindestens eine Turmreaktor wie folgt aufgebaut ist:
- Im unteren Drittel ist der Turmreaktor (1) in Form eines Hydrozyklons (2) mit anhängendem Wärmetauscher (5) ausgebildet und weist eine Zuführung (3) für die Paste, Aufschlämmung und/oder flüssiges Rohstoffgemisch auf,
- der Hydrozyklon (2) ist über eine Druckleitung mit der Kopfseite des Turmreaktors (1) verbunden;
- die Kopfseite des Turmreaktors (1) ist im oberen Drittel in Form einer Fallstromkaskade (7) ausgebildet;
- die Kaskade (7) steht über eine Leitung mit dem mittleren Teil des Turmreaktors in Verbindung der in Form einer ein- oder mehrstufigen Fallfilmzone (9) mit Vorentspannung (8) ausgebildet ist.

20. Vorrichtung nach Anspruch 19, **dadurch gekennzeichnet, daß** der Hydrozyklon (2) einen Brüdenstutzen aufweist und im unteren Teil des Turmreaktors mit einem Wärmeaustauscher (5) verbunden ist, so daß das Produkt im natürlichen oder erzwungenen Kreislauf über den Wärmeaustauscher (5) in den Hydrozyklon (2) geführt werden kann.

21. Vorrichtung nach Anspruch 20, **dadurch gekennzeichnet, daß** der Wärmeaustauscher (5) einen separaten Gaskamin (6) aufweist, der in einen oberen Teil des Zyklons (2) führt.

22. Vorrichtung nach mindestens einem der Ansprüche 19 bis 21, **dadurch gekennzeichnet, daß** die Kaskade (7) mindestens zwei Schalen, bevorzugt vier Reaktionsschalen aufweist.

23. Vorrichtung nach Anspruch 22, **dadurch gekennzeichnet, daß** in mindestens einem Kaskadenbereich ein Rühraggregat (10) integriert ist.

24. Vorrichtung nach mindestens einem der Ansprüche 19 bis 23, **dadurch gekennzeichnet, daß** die Druckleitung (4) als Doppelmantelleitung ausgebildet ist, die sich im Inneren der ersten Kopfkaskade als Heizwendel fortsetzt.

25. Vorrichtung nach mindestens einem der Ansprüche 19 bis 24, **dadurch gekennzeichnet, daß** die Druckleitung (4) mit einem Volumenförderer und statischen Mischelementen oder einer Mischpumpe ausgestattet ist.

26. Vorrichtung nach mindestens einem der Ansprüche 19 bis 25, **dadurch gekennzeichnet, daß** der Hydrozyklon einen Inert-Gaseintritt in seinem konischen Bereich besitzt.

27. Vorrichtung nach mindestens einem der Ansprüche 19 bis 26, **dadurch gekennzeichnet, daß** eine der Kopfkaskaden im Brüdenbereich einen Inert-Gaseintritt besitzt.

28. Vorrichtung nach mindestens einem der Ansprüche 19 bis 27, **dadurch gekennzeichnet, daß** die Vorentspannungszone (8) zum Fallfilmteil die Form eines Hydrozyklons hat.

29. Vorrichtung nach mindestens einem der Ansprüche 19 bis 28, **dadurch gekennzeichnet, daß** die Vorentspannungszone mit mindestens einer weiteren Druckreduzierkammer ausgestattet ist.

30. Vorrichtung nach Anspruch 19, **dadurch gekennzeichnet, daß** die mindestens eine Fallfilmzone (9) ein Rohrfeld aufweist.

31. Vorrichtung nach Anspruch 30, **dadurch gekennzeichnet, daß** jedem Rohr der Rohrfelder ein Einlaufzylinder (11) zugeordnet ist, der eine gleichmäßige Benetzung der Rohrinnenseiten sicherstellt, wobei dieser
- mit überlappenden, nicht-axialen Schlitzen am Umfang ausgestattet ist,
- aufgrund des Schlitzdruckverlustes eine konstante Füllhöhe oberhalb der Rohrreihen erzeugt wird
- und einen Maximalüberlauf mit gezackter Krone besitzt,
- die Schlitze so ausgebildet sind, daß Viskositätsunterschiede keine Änderung der Füllhöhe bewirken, wohl aber eine proportionale Änderung von Füllhöhe zu Flüssigkeitsdurchsatz.$

32. Vorrichtung nach mindestens einem der Ansprüche 29 oder 31, **dadurch gekennzeichnet, daß** die Länge der Fallfilmrohre so bemessen ist und die inneren Oberflächen eine Struktur aufweisen, daß eine totale Benetzung in Abhängigkeit der Produktviskosität erfolgt (L:D ≥ 10 ≤ 25).

33. Vorrichtung nach mindestens einem der Ansprüche 29 bis 32, **dadurch gekennzeichnet, daß** der Durchmesser der Fallfilmrohre größer als die größte auftretende Reaktionsdampfblase gewählt wird und daß die Reaktionsbrüden im Gleichstrom mit dem abwärtsfließenden Produkt geführt werden.

34. Vorrichtung nach mindestens einem der Ansprüche 19 bis 33, **dadurch gekennzeichnet, daß** die Reaktionsgase und/oder Fremdgas von Reaktionszone zu tionsgase und/oder Fremdgas von Reaktionszone zu Reaktionszone im Gleichstrom mittels abgetauchten Zuführungen durch die Reaktionsflüssigkeit geleitet werden.

35. Vorrichtung nach mindestens einem der Ansprüche 19 bis 34, **dadurch gekennzeichnet, daß** der gesamte Turmreaktor mit einem Mantel zur Beheizung mit organischem Heizmedium in Dampfform ausgerüstet ist.

36. Vorrichtung nach mindestens einem der Ansprüche 19 bis 35, **dadurch gekennzeichnet, daß** alle Wärmetauschflächen in den einzelnen Zonen für flüssigen Wärmeträger zur prozeßrelevanten Temperatur- und Wärmemengenverteilung ausgerüstet sind.

## Claims

1. Method for continuously producing high molecular weight polyester by esterification of dicarboxylic acids and/or transesterification of dicarboxylic acid esters with diols in the presence of catalysts to form a prepolymer and polycondensation thereof into high molecular weight polyester, **characterised in that**
a1) a paste and/or a suspension of the dicarboxylic acid and of the diol is produced, a molar ratio of diol to dicarboxylic acid of 0.8 to 1.8, a temperature of from 20 to 90 °C and a pressure of between 0.1 and 1.0 bar being maintained, or
a2) the dicarboxylic acid ester is melted and mixed together with the diol in the molar ratio of diol to dicarboxylic acid ester of 1.2 to 1.8 at a temperature of from 145 to 165 °C,
b) the products from a1) and/or a2), are continuously supplied to a tower reactor where esterification and/or transesterification takes place continuously, simultaneously and uninterruptedly until precondensation, the following conditions being maintained:
b1) the products from a1) and/or a2) are subjected to a treatment at a temperature of from 170 to 270 °C and a pressure of from 0.3 to 3 bar, a partial quantity of the catalyst being supplied in this first reaction step and the reaction vapours being removed in situ from the reaction mixture by means of a hydrocyclone,
b2) the product of reaction step b1) is continuously transferred into a pipeline and maintained at a pressure of 1 to 10 bar and at 200 to 280 °C, 0.03 to 0.3 mol diol being supplied in this reaction step,
b3) the product of reaction step b2) is continuously directed over a downflow gas hole with at least 2 trays, in which automatically-reducing pressures in the range of from 0.2 to 1 bar and automatically-increasing temperatures of from 230 to 280 °C are maintained, 0.02 to 0.2 mol diol and a partial quantity of the catalyst being supplied into the third zone,
b4) the product from reaction step b3) is subjected to a further reaction at from 0.01 to 0.1 bar and from 240 to 280 °C in a falling film reaction zone, and
b5) the reaction products water or methanol, by-products and excess diol from reaction steps b1) and b3) to b4) are removed and the diol is returned back to the individual reaction steps after purification,
c1) the prepolymer obtained from b4) is continuously polycondensed in a conventional polycondensation apparatus at temperatures of from 240 to 290 °C and at pressures of from 0.0002 to 0.003 bar or
c2) the obtained prepolymer is solidified, processed into pellets and subjected to postcondensation in a solid phase at temperatures of between 160 and 230 °C under conditioned inert gas.

2. Method according to claim 1 **characterised in that**, an inert gas and/or a superheated process gas is also directed through the base for assisting separation.

3. Method according to at least either claim 1 or claim 2, **characterised in that**, in reaction step b1), a temperature of from 170 to 200 °C and pressure of between 0.3 and 1 bar is maintained during transesterification.

4. Method according to at least one of claims 1 to 3, **characterised in that**, in reaction step b1), a temperature of from 200 to 270 °C and pressure of between 0.3 and 3 bar is maintained during esterification.

5. Method according to at least one of claims 1 to 4, **characterised in that**, during transesterification, the pressure in reaction step b2) is in the range of from 2 to 5 bar, the dwell time is between 1 and 5 minutes and the temperature is in the range of from 200 to 240 °C, preferably between 210 and 230 °C.

6. Method according to at least one of claims 1 to 5, **characterised in that**, during esterification, the pressure in reaction step b2) is in the range of from 2 to 6 bar, the dwell time is between 1 and 4 minutes and the temperature is in the range of from 220 to 280 °C, preferably between 230 and 270 °C.

7. Method according to at least one of claims 1 to 6, **characterised in that**, during transesterification in reaction step b3), a temperature of from 220 to 260 °C is maintained.

8. Method according to at least one of claims 1 to 7, **characterised in that**, during esterification in reaction step b3), a temperature of from 230 to 280 °C is maintained.

9. Method according to at least one of claims 1 to 8, **characterised in that**, in reaction step b3), a pressure falling by 20 to 60 mbar and a temperature increasing by 5 to 20 °C is set per chamber, as a result of which a precondensate with from 5 to 20 repeat units and a conversion of from 98.5 to 99.5 % during transesterification or a conversion of from 97 to 99.5 % during esterification is produced.

10. Method according to claim 9, **characterised in that**, in addition to the formed process gas, an inert gas and/or a further superheated process gas for assisting separation of the by-products is directed into at least the first tray below the reaction material surface.

11. Method according to either claim 9 or claim 10, **characterised in that** the dwell time in the individual trays ranges from 5 to 15 min.

12. Method according to at least one of claims 9 to 11, **characterised in that** the product is supplied centrally into the trays and the product at the outer wall of the tray discharges over the outer wall in a uniformly distributed manner for accelerated degassing and thereafter is brought together again centrally.

13. Method according to at least one of claims 1 to 12, **characterised in that**, in reaction step b4), which is configured as a falling-film reaction zone, the reaction is continued preferably at from 245 to 270 °C and from 0.01 to 0.05 bar with a dwell time of from 4 to 30 minutes, a precondensate being produced with 10 to 40 repeat units and a conversion of 99.8 %.

14. Method according to at least one of claims 1 to 13, **characterised in that** the reaction product, after leaving the one or more falling-film zones b4), is brought together by a heated cone and gas-liquid separation is undertaken in the central region of said cone by means of spoilers.

15. Method according to at least one of claims 1 to 14, **characterised in that** 1,4-butanediol is used as diol.

16. Method according to at least one of claims 1 to 15, **characterised in that** terephthalic acid is used as dicarboxylic acid.

17. Method according to at least one of claims 1 to 16, **characterised in that** dimethyl terephthalate (DMT) is used as dicarboxylic acid ester.

18. Method according to at least one of claims 1 to 17, **characterised in that** antimony, germanium, tin and/or titanium metal or organic compounds therefrom, also in a porous carrier substance, are used as catalysts.

19. Device for implementing the method according to at least one of claims 1 to 18, comprising at least one stirring vessel, reaction zones for simultaneous esterification and/or transesterification as well as prepolycondensation and at least one polycondensation reactor for the solid and/or liquid phase, the individual reaction zones being connected to one other, **characterised in that** the reaction zones are combined in a tower reactor (1) and are connected to at least one reactor for polycondensation, the at least one tower reactor being constructed as follows:
- in the lower third, the tower reactor (1) is in the form of a hydrocyclone (2) with attached heat exchanger (5) and has a supply line (3) for the paste, suspension and/or liquid raw material mixture,
- the hydrocyclone (2) is connected via a pressure pipe to the top side of the tower reactor (1) ;
- the upper third of the top side of the tower reactor (1) is in the form of a downflow cascade (7);
- the cascade (7) is connected via a pipe to the central part of the tower reactor which is in the form of a single or multiple-stage falling-film zone (9) with preliminary pressure reduction (8).

20. Device according to claim 19, **characterised in that** the hydrocyclone (2) has a vapour nozzle and is connected in the lower part of the tower reactor to a heat exchanger (5) so the product can be directed in natural or forced circulation via the heat exchanger (5) into the hydrocyclone (2).

21. Device according to claim 20, **characterised in that** the heat exchanger (5) has a separate gas chimney (6) which leads into an upper part of the cyclone (2).

22. Device according to at least one of claims 19 to 21, **characterised in that** the cascade (7) has at least two trays, preferably four reaction trays.

23. Device according to claim 22, **characterised in that** a stirring assembly (10) is integrated into at least one cascade region.

24. Device according to at least one of claims 19 to 23, **characterised in that** the pressure pipe (4) is configured as a double-walled jacket pipe which is continues inside the first top cascade as a heating coil.

25. Device according to at least one of claims 19 to 24, **characterised in that** the pressure pipe (4) is equipped with a volume conveyor and static mixing elements or with a mixing pump.

26. Device according to any one of claims 19 to 25, **characterised in that** the hydrocyclone has an inert gas inlet in its conical region.

27. Device according to at least one of claims 19 to 26, **characterised in that** one of the top cascades in the vapour region has an inert gas inlet.

28. Device according to at least one of claims 19 to 27, **characterised in that** the preliminary pressure reduction zone (8) for the falling-film part is in the shape of a hydrocyclone.

29. Device according to at least one of claims 19 to 28, **characterised in that** the initial pressure reduction zone is equipped with at least one further pressure reduction chamber.

30. Device according to claim 19, **characterised in that** the at least one falling-film zone (9) has a pipe field.

31. Device according to claim 30, **characterised in that** an inlet cylinder (11) is assigned to each pipe of the pipe fields which ensures uniform wetting of the insides of the pipes, said inlet cylinder
- being equipped with overlapping, non-axial slots on the circumference,
- a constant filling level being produced above the series of pipes due to the slot pressure loss,
- and having a maximum overflow with an indented crown,
- the slots being formed in such a way that viscosity differences effect no change in the filling level but effect a proportional change in filling level to liquid throughput.

32. Device according to at least one of either claim 29 or claim 31, **characterised in that** the length of the falling-film pipes is so dimensioned and the inner surfaces have such a structure that total wetting is effected dependent upon the product viscosity (L:D ≥10 ≤25).

33. Device according to at least one of claims 29 to 32, **characterised in that** the diameter of the falling-film pipes is selected so as to be larger than the largest occurring reaction vapour bubble and **in that** the reaction vapours are directed in parallel flow with the downwardly-flowing product.

34. Device according to at least one of claims 19 to 33, **characterised in that** the reaction gases and/or foreign gas are directed through the reaction liquid from reaction zone to reaction zone in parallel flow by means of dipped supply lines.

35. Device according to at least one of claims 19 to 34, **characterised in that** the entire tower reactor is equipped with a jacket for heating with an organic heating medium in vapour form.

36. Device according to at least one of claims 19 to 35, **characterised in that** all heat exchange surfaces in the individual zones are equipped for liquid heat carriers for process-relevant distribution of temperature and heat.

## Revendications

1. Procédé de préparation en continu de polyester à haut poids moléculaire grâce à une estérification d'acides dicarboxyliques et/ou une transestérification d'esters d'acides dicarboxyliques avec des diols en présence de catalyseurs avec formation d'un prépolymère et polycondensation de celui-ci pour donner le polyester à haut poids moléculaire,
**caractérisé en ce que**
a1) une pâte et/ou une suspension de l'acide dicarboxylique et du diol est préparé, un rapport molaire du diol sur l'acide dicarboxylique de 0,8 à 1,8, une température de 20 à 90° et une pression comprise entre 0,1 et 1,0 bar étant observés, ou
a2) l'ester d'acide dicarboxylique est fondu et est mélangé en commun avec le diol en un rapport molaire du diol sur l'ester d'acide dicarboxylique de 1,2 à 1,8 à une température de 145 à 165°C,
b) les produits issus de a1 et/ou de a2) sont amenés en continu à une tour de réaction, et une estérification et/ou une transestérification est mise en oeuvre en continu, simultanément et sans interruption dans la tour de réaction jusqu'à précondensation, les conditions suivantes étant observées:
b1) les produits issus de a1) et/ou de a2) sont soumis à un traitement à une température de 170 à 270°C et à une pression de 0,3 à 3 bars, une quantité partielle du catalyseur étant amenée dans cette première phase réactionnelle et les vapeurs réactionnelles étant éliminées du mélange réactionnel in situ grâce à un hydrocyclone,
b2) le produit de la phase réactionnelle b1) est transféré en continu dans un tronçon de tuyauterie et maintenu à une pression de 1 à 10 bars et entre 200 et 280°C, 0,03 à 0,3 mole de diol étant amené dans cette phase réactionnelle,
b3) le produit de la phase réactionnelle b2) est amené en continu par l'intermédiaire d'une cascade à descendage comportant au moins deux plateaux, dans laquelle sont observées des pressions dans la plage de 0,2 à 1 bar se réduisant automatiquement et des températures de 230 à 280°C augmentant automatiquement, 0,02 à 0,2 mole de diol et une quantité partielle du catalyseur étant amenée dans la troisième zone.
b4) le produit issu de la phase réactionnelle b3) est soumis à une autre réaction entre 0,01 et 0,1 bar et entre 240 et 280°C dans une zone réactionnelle à descendage, et
b5) les produits réactionnels eau ou méthanol, des sous-produits et du diol excédentaire issus des phases réactionnelles b1 et b3) à b4) sont éliminés et le diol est à nouveau recyclé vers les phases réactionnelles individuelles après purification,
c1) le prépolymère obtenu à partir de b4) est polycondensé en continu dans une installation de polycondensation usuelle à des températures de 240 à 290°C et à des pressions de 0,0002 à 0,003 bar ou
c2) le prépolymère obtenu est congelé, transformé en pastille et soumis à une post-condensation dans la phase solide à des températures comprises entre 160 et 230°C sous gaz inerte conditionné.

2. Procédé selon la revendication 1, **caractérisé en ce qu'**un gaz inerte et/ou un gaz de processus surchauffé est canalisé de manière supplémentaire par le fond pour soutenir l'isolation.

3. Procédé selon l'une au moins des revendications 1 à 2, **caractérisé en ce qu'**une température de 170 à 200°C et une pression comprise entre 0,3 et 1 bar sont observées dans la phase réactionnelle b1) lors de la transestérification.

4. Procédé selon l'une au moins des revendications 1 à 3, **caractérisé en ce qu'**une température de 200 à 270°C et une pression comprise entre 0,3 et 3 bars sont observées dans la phase réactionnelle b1) lors de l'estérification.

5. Procédé selon l'une au moins des revendications 1 à 4, **caractérisé en ce que**, lors de la transestérification, la pression dans la phase réactionnelle b2) se situe dans la plage de 2 à 5 bars, le temps de séjour est compris entre 1 et 5 minutes, et la température se situe dans la plage de 200 à 240°C et est comprise de manière préférée entre 210 et 230°C.

6. Procédé selon l'une au moins des revendications 1 à 5, **caractérisé en ce que**, lors de l'estérification, la pression dans la phase réactionnelle 2) se situe dans la plage de 2 à 6 bars, le temps de séjour est compris entre 1 et 4 minutes, et la température se situe dans la plage de 220 à 280°C et est comprise de manière préférée entre 230 et 270°C.

7. Procédé selon l'une au moins des revendications 1 à 6, **caractérisé en ce qu'**une température de 220 à 260°C est observée dans la phase réactionnelle b3) lors de la transestérification.

8. Procédé selon l'une au moins des revendications 1 à 7, **caractérisé en ce qu'**une température de 230 à 280°C est observée dans la phase réactionnelle b3) lors de l'estérification.

9. Procédé selon l'une au moins des revendications 1 à 8, **caractérisé en ce qu'**une pression baissant de 20 à 60 mbars et une température augmentant de 5 à 20°C s'ajustent pour chaque chambre dans la phase réactionnelle b3), et il en résulte un précondensat ayant 5 à 20 unités de répétition et une conversion de 98,5 à 99,5 % lors de la transestérification ou bien une conversion de 97 à 99,5 % lors de l'estérification.

10. Procédé selon la revendication 9, **caractérisé en ce qu'**un gaz inerte et/ou un autre gaz de procédé surchauffé est amené sous la surface de la masse réactionnelle en supplément du gaz de procédé formé pour soutenir l'isolation des sous-produits dans au moins le premier plateau.

11. Procédé selon la revendication 9 ou 10, **caractérisé en ce que** le temps de séjour dans les plateaux individuels se situe dans la plage de 5 à 15 minutes.

12. Procédé selon l'une au moins des revendications 9 à 11, **caractérisé en ce que** l'apport de produit dans les plateaux a lieu de manière centrale et le produit s'écoule sur le bord extérieur du plateau de manière régulièrement répartie par l'intermédiaire de la paroi extérieure afin d'accélérer le dégazage et est ensuite réuni à nouveau de manière centrale.

13. Procédé selon l'une au moins des revendications 1 à 12, **caractérisé en ce que** la réaction est poursuivie dans la phase réactionnelle b4), qui est conçue en tant que zone réactionnelle à descendage, de manière préférée entre 245 et 270°C et entre 0,01 et 0,05 bar avec un temps de séjour de 4 à 30 minutes, un précondensat ayant 10 à 40 unités de répétition et un taux de conversion de 99,8 % en résultat.

14. Procédé selon l'une au moins des revendications 1 à 13, **caractérisé en ce que** le produit réactionnel est réuni grâce à un cône chauffé après avoir quitté la ou les zones de descendage b4) et une séparation gaz-liquide est réalisée dans son secteur central grâce à un déflecteur.

15. Procédé selon l'une au moins des revendications 1 à 14, **caractérisé en ce que** du 1,4-butanediol est utilisé en tant que diol.

16. Procédé selon l'une au moins des revendications 1 à 15, **caractérisé en ce que** de l'acide téréphtalique est utilisé en tant qu'acide dicarboxylique.

17. Procédé selon l'une au moins des revendications 1 à 16, **caractérisé en ce que** du téréphtalate de diméthyle (DMT) est utilisé en tant qu'ester d'acide dicarboxylique.

18. Procédé selon l'une au moins des revendications 1 à 17, **caractérisé en ce que** du métal antimoine, germanium, étain et/ou titane ou des composés organiques de ceux-ci, également dans une substance porteuse poreuse, sont utilisés en tant que catalyseurs.

19. Dispositif pour la mise en oeuvre du procédé selon l'une au moins des revendications 1 à 18, comportant au moins un agitateur, des zones réactionnelles pour, simultanément, l'estérification et/ou la transestérification ainsi que la polycondensation, ainsi qu'au moins un réacteur de polycondensation pour phase solide et/ou phase liquide, les zones réactionnelles individuelles étant reliées les unes avec les autres,
**caractérisé en ce que** les zones réactionnelles sont réunies dans une tour de réaction (1) et sont reliées avec un réacteur pour la polycondensation, la au moins une tour de réaction étant constituée comme suit :
- dans le tiers inférieur, la tour de réaction (1) est conçu sous la forme d'un hydrocyclone (2) avec un échangeur de chaleur (5) associé et présente une alimentation (3) pour la pâte, la précipitation et/ou le mélange liquide de matières premières,
- l'hydrocyclone (2) est relié avec le côté de tête de la tour de réaction (1) par l'intermédiaire d'une conduite sous pression ;
- le côté de tête de la tour de la réaction (1) est conçu dans le tiers supérieur sous la forme d'une cascade à descendage ;
- la cascade (7) est en liaison par l'intermédiaire d'une conduite avec la partie médiane de la tour de réaction, qui est conçue sous la forme d'une zone de descendage (9) à un ou plusieurs étages avec une prédétente (8).

20. Dispositif selon la revendication 19, **caractérisé en ce que** l'hydrocyclone présente un raccord pour buées et est relié dans la partie inférieure de la tour de réaction avec un échangeur de chaleur (5), de sorte que le produit peut être amené en circulation naturelle ou forcée dans l'hydrocyclone (2) par l'intermédiaire de l'échangeur de chaleur (5).

21. Dispositif selon la revendication 20, **caractérisé en ce que** l'échangeur de chaleur (5) présente une cheminée de gaz (6) séparée qui conduit dans une partie supérieure du cyclone (2).

22. Dispositif selon l'une au moins des revendications 19 à 21, **caractérisé en ce que** la cascade (7) présente au moins deux plateaux, de manière préférée quatre plateaux réactionnels.

23. Dispositif selon la revendication 22, **caractérisé en ce qu'**une unité d'agitation (10) est intégrée dans au moins un secteur de cascade.

24. Dispositif selon l'une au moins des revendications 19 à 23, **caractérisé en ce que** la conduite sous pression (4) est conçue en tant que conduite à double gaine, qui se poursuit en tant que filament chauffant à l'intérieur de la première cascade de tête.

25. Dispositif selon l'une au moins des revendications 19 à 24, **caractérisé en ce que** la conduite sous pression (4) est équipée d'un transporteur volumique et d'éléments de mélange statiques ou d'une pompe mélangeuse.

26. Dispositif selon l'une au moins des revendications 19 à 25, **caractérisé en ce que** l'hydrocyclone possède une entrée de gaz inerte dans son secteur conique.

27. Dispositif selon l'une au moins des revendications 19 à 26, **caractérisé en ce qu'**une des cascades de tête possède une entrée de gaz inerte dans le secteur des buées.

28. Dispositif selon l'une au moins des revendications 19 à 27, **caractérisé en ce que** la zone de prédétente (8) revêt la forme d'un hydrocyclone pour ce qui est de la partie de descendage.

29. Dispositif selon l'une au moins des revendications 19 à 28, **caractérisé en ce que** la zone de prédétente est équipée d'au moins une autre chambre de réduction de pression.

30. Dispositif selon la revendication 19, **caractérisé en ce que** la au moins une zone de descendage (9) présente un compartiment tubulaire.

31. Dispositif selon la revendication 30, **caractérisé en ce qu'**un cylindre d'admission (11), qui assure une humidification régulière de faces intérieures de tube, est assigné à chaque tube des compartiments tubulaires,
- celui-ci étant équipé sur le pourtour de fentes non axiales se chevauchant,
- une hauteur de remplissage constante étant générée au-dessus des rideaux de tube en raison de la perte de pression par les fentes,
- et possédant un conduit de trop-plein maximal à couronne crénelée,
- les fentes étant conçues de sorte que des différences de viscosité ne provoquent aucune modification de la hauteur de remplissage, mais bien une modification de la hauteur de remplissage proportionnelle au débit de liquide.

32. Dispositif selon l'une au moins des revendications 29 à 31, **caractérisé en ce que** la longueur des tubes de descendage est mesurée, et les surfaces intérieures présentent une structure, de sorte qu'une humidification totale ait lieu en fonction de la viscosité du produit (L : D ≥10 ≤ 25).

33. Dispositif selon l'une au moins des revendications 29 à 32, **caractérisé en ce que** le diamètre des tubes de descendage est choisi supérieur à la plus grosse bulle de vapeur réactionnelle apparaissant, et les buées de réaction sont amenées en écoulement parallèle avec le produit coulant vers le bas.

34. Dispositif selon l'une au moins des revendications 19 à 33, **caractérisé en ce que** les gaz réactionnels et/ou le gaz étranger est conduit de zone réactionnelle en zone réactionnelle via le liquide réactionnel en écoulement parallèle grâce à des alimentations immergées.

35. Dispositif selon l'une au moins des revendications 19 à 34, **caractérisé en ce que** la totalité de la tour de réaction est équipée d'une gaine pour le chauffage par du milieu de chauffage organique sous forme de vapeur.

36. Dispositif selon l'une au moins des revendications 19 à 35, **caractérisé en ce que** toutes les surfaces d'échange de chaleur dans les zones individuelles pour agents caloporteurs liquides sont équipées pour une répartition, appropriée pour le procédé, de la température et des quantités de chaleur.
